# EUROPÄISCHE PATENTANMELDUNG

(11) **EP 2 799 987 A2**
(43) Veröffentlichungstag der Anmeldung: **05.11.2014**
(21) Anmeldenummer: 14166641.2
(22) Anmeldetag: 30.04.2014
(51) Int. Cl.: G06F 9/48

(54) **Verfahren zur elektronischen Archivierung von Datenobjekten und Computerprogrammprodukt**

(30) Priorität: 30.04.2013 DE 102013104424
(71) Anmelder: cp.media AG, 6340 Baar (CH); Airbus Operations GmbH, 21129 Hamburg (DE)
(72) Erfinder: Brennecke, Burkhardt, 10435 Berlin (DE); Feller, Olaf, 68150 Ribeauville (FR); Wiebecke, Gunnar, 21129 Hamburg (DE)
(74) Vertreter: Bittner, Thomas L.

(57) **Zusammenfassung**

Die Anmeldung betrifft ein Verfahren zur elektronischen Archivierung von Datenobjekten mittels einer Datenverarbeitungseinrichtung, wobei das Verfahren folgende Schritte umfasst: Empfangen eines Hashwerttupels, der einen oder mehrere Hashwerte umfasst, wobei jeder Hashwert jeweils einem Datenobjekt zugeordnet ist, Empfangen einer Zeitinformation zu dem Hashwerttupel, die einen Zeitraum angibt, innerhalb dessen die Hashwerte des Hashwerttupels elektronisch archiviert werden sollen, und Vergleichen der Zeitinformation mit einer vorbestimmten Zeitangabe, wobei Archivierungsschritte ausgeführt werden, wenn die Zeitin-formation einen Zeitraum für die elektronische Archivierung angibt, der kleiner ist als die vorbestimmte Zeitangabe. Weiterhin betrifft die Anmeldung ein Computerprogrammprodukt.

## Beschreibung

Die Erfindung bezieht sich auf ein Verfahren zur elektronischen Archivierung von Datenobjekten mittels einer Datenverarbeitungseinrichtung sowie ein Computerprogrammprodukt.

### Hintergrund der Erfindung

Für die elektronische Archivierung von Datenobjekten sind verschiedene Verfahren und Standards bekannt, beispielsweise das Projekt ArchiSig. Hierbei ist vorgesehen, dass mehrere Datenobjekte oder diesen zugeordnete Hashwerte in einer Warteschlange angeordnet werden. Anschließend wird ein Archivzeitstempel erstellt, indem zu allen Elementen (Datenobjekten / Hashwerten) in der Warteschlange ein reduzierter Hashbaum erzeugt wird und signiert wird. Bei großen und/oder sehr vielen Elementen kann es mehrere Stunden dauern, bis die Archivierung abgeschlossen ist. Die Einhaltung von Vorgaben für eine Archivierung innerhalb einer vorbestimmten Dauer ist hierbei nicht möglich. Die Archivierung erfolgt vielmehr "im Laufe des Tages", was für einige Anwendungen auch durchaus ausreichend ist.

Das Projekt ArchiSig ist in der technischen Richtlinie 03125 des Bundesamts für Sicherheit in der Informationstechnik beschrieben.

### Zusammenfassung der Erfindung

Aufgabe der Erfindung ist es, Technologien zur elektronischen Archivierung von Datenobjekten anzugeben, die einen deterministischen Ablauf der Archivierung ermöglichen.

Die Aufgabe wird durch ein Verfahren nach Anspruch 1 sowie ein Computerprogrammprodukt nach Anspruch 10 gelöst. Bevorzugte Ausführungsformen der Erfindung sind Gegenstand von abhängigen Ansprüchen.

Nach einem Aspekt der Erfindung ist ein Verfahren zur elektronischen Archivierung von Datenobjekten mittels einer Datenverarbeitungseinrichtung bereitgestellt. Das Verfahren umfasst folgende Schritte: Ein Hashwerttupel wird empfangen, der einen oder mehrere Hashwerte umfasst, wobei jeder Hashwert jeweils einem Datenobjekt zugeordnet ist. Es wird eine Zeitinformation zu dem Hashwerttupel empfangen, die einen Zeitraum angibt, innerhalb dessen die Hashwerte des Hashwerttupels elektronisch archiviert werden sollen. Die Zeitinformation wird mit einer vorbestimmten Zeitangabe verglichen. Wenn die Zeitinformation einen Zeitraum für die elektronische Archivierung angibt, der kleiner ist als die vorbestimmte Zeitangabe, werden folgende Schritte ausgeführt:
a) Es wird ein erster Zeitstempel zu einem Hashwert erzeugt und dem Hashwert zugeordnet.
b) Es wird eine Warteschlange zur weiteren Bearbeitung der Hashwerte erzeugt.
c) Eine Bearbeitungszeit für die elektronische Archivierung der in der Warteschlange befindlichen Hashwerte wird bestimmt. Die Bearbeitungszeit ergibt aus der Summe der Zeit, die für die elektronische Archivierung der bereits in der Warteschlange befindlichen Hashwerte benötigt wird, sowie der Zeit, die für die elektronische Archivierung eines weiteren Hashwertes benötigt wird.
d) Ein Hashwert wird in der Warteschlange angeordnet, wenn die Bearbeitungszeit kleiner ist als die vorbestimmte Zeitdauer.
e) Die Schritte c) und d) werden wiederholt, bis beim Schritt c) eine Bearbeitungszeit bestimmt wird, die größer ist als die vorbestimmte Zeitdauer.
f) Anschließend wird ein Archivzeitstempel zu den in der Warteschlange befindlichen Hashwerten erzeugt und diesen zugeordnet.

Nach einem weiteren Aspekt ist ein Computerprogrammprodukt vorgesehen, das auf einem physikalischen Speicher ein Programm umfasst, welches bei Abarbeitung in einer Datenverarbeitungseinrichtung ein Verfahren zur elektronischen Archivierung von Datenobjekten ausführt.

Das Verfahren ermöglicht es, eine elektronische Archivierung von Datenobjekten, beispielsweise Dokumenten, innerhalb einer vorgegebenen Zeitangabe durchzuführen. Beispielsweise kann in einem Produktionsprozess vorgesehen sein, dass jeder Produktionsschritt protokolliert wird. Nach Ausführung und Protokollierung eines Schrittes wird der folgende Produktionsschritt nur eingeleitet, wenn sichergestellt ist, dass die Dokumentation des vorangehenden Produktionsschritts elektronisch archiviert ist. Hierdurch soll eine rechtssichere Protokollierung gewährleistet werden. Wenn bei einem Produktionsschritt viele Dokumente erzeugt werden, kann mit herkömmlichen Verfahren Archivierung innerhalb eines vorbestimmten und gegebenenfalls sehr kurzen Zeitfensters nicht garantiert werden.

Zunächst wird ein Hashwerttupel empfangen, der einen oder mehrere Hashwerte umfasst. Jeder Hashwert ist einem Datenobjekt zugeordnet, beispielsweise einem Textdokument, einer Audiodatei oder einer Videodatei. Das Datenobjekt kann auch eine Kombination der vorgenannten Formate umfassen. Zu dem Hashwerttupel wird eine Zeitinformation empfangen. Diese gibt einen Zeitraum an, innerhalb dessen alle Hashwerte des Tupels elektronische archiviert werden sollen. Die Zeitinformation wird mit einer vorbestimmten Zeitangabe verglichen, welche beispielsweise durch einen Zyklus einer Produktionsreihe vorgegeben wird.

Wenn die Zeitinformation kleiner ist als die vorbestimmte Zeitangabe werden anschließend folgende Schritte ausgeführt, um eine rechtzeitige Archivierung zu gewährleisten. Für einen Hashwert wird zunächst ein erster Zeitstempel erzeugt und diesem zugeordnet. Hierdurch ist eine erste Archivierungsstufe erreicht. Falls die Datenverarbeitungseinrichtung, auf welcher das Verfahren ausgeführt wird, an dieser Stelle ausfallen sollte, ist zumindest eine Grundsicherung erzielt. Es wird eine Warteschlange für die weitere Bearbeitung der Hashwerte erzeugt. In dieser Warteschlange werden so viele Hashwerte angeordnet, dass die Zeit zur Bearbeitung der in der Warteschlange befindlichen Hashwerte noch kleiner ist, als die vorbestimmte Zeitangabe. Wenn diese Grenze erreicht wird, werden die in der Warteschlange befindlichen Hashwerte archiviert. Die Bearbeitungszeit der Warteschlange wird wesentlich durch die Zeit bestimmt, die für die Erzeugung eines jeweiligen Archivhashwerts für die in der Warteschlange befindlichen Hashwerte. Wenn für das Einstellen eines oder mehrerer Hashwerte in die Warteschlange eine nicht zu vernachlässigende Einstellzeit benötigt wird, so ist diese bei der Bestimmung der Bearbeitungszeit ebenfalls zu berücksichtigen. Zu jedem Hashwert wird ein Archivhashwert erzeugt. Die Archivhashwerte können beispielsweise in einem Archivhashbaum angeordnet werden. Es kann vorgesehen sein, dass für die Spitze des Archivhashbaums ein einziger Archivzeitstempel erzeugt und diesem zugeordnet wird. Je mehr Hashwerte in der Warteschlange angeordnet sind, desto länger dauert die Erzeugung der einzelnen Archivhashwerte. Durch die Bearbeitung der Warteschlange innerhalb der vorbestimmten Zeitangabe wird gewährleistet, dass die Hashwerte rechtzeitig elektronisch archiviert werden.

Das Verfahren wird mittels einer Datenverarbeitungseinrichtung ausgeführt. Die Datenverarbeitungseinrichtung kann beispielsweise einen oder mehrere Prozessoren sowie einen Speicher mit einem flüchtigen (z.B. Arbeitsspeicher) und / oder einem nicht flüchtigen (z.B. Festplatte) Speicherbereich aufweisen. Des Weiteren kann die Datenverarbeitungseinrichtung Kommunikationseinrichtungen zum Empfangen und / oder Senden von Daten und / oder Datenströmen aufweisen, beispielsweise einen Netzwerkanschluss (*LAN - local area network*), einen Anschluss für ein kabelloses Netzwerk (*WLAN - wireless local area network*), einen USB-Anschluss (*USB - universal spezial bus*), einen Bluetooth-Adapter und / oder einen Firewire-Anschluss (IEEE 1394). Die Datenverarbeitungseinrichtung kann mit einer Anzeigeeinrichtung verbunden sein. Alternativ kann eine Anzeigeeinrichtung in die Datenverarbeitungseinrichtung integriert sein.

Elektronische Zeitstempel sind gemäß ISO18014-1 allgemein digitale Daten, mit denen die Existenz bestimmter Daten vor einem bestimmten Zeitpunkt bewiesen werden kann. Häufig, wie beispielsweise beim Time Stamp Protocol aus RFC3161, werden Zeitstempel unter Einsatz digitaler Signaturen erstellt. Somit sind Zeitstempel eine elektronische Bescheinigung darüber, dass die mit dem Zeitstempel signierten Daten zum Zeitpunkt der Signatur in der signierten Form vorgelegen haben. Elektronische Zeitstempel können als fortgeschrittene oder als qualifizierte Zeitstempel erstellt werden.

Ein fortgeschrittener Zeitstempel (auch als fortgeschrittene elektronische Signatur bezeichnet) ist eine elektronische Signatur, die es ermöglicht, die Authentizität und Unverfälschtheit der durch sie signierten Daten zu prüfen. Gemäß der EG-Richtlinie 1999/93/EG soll ein fortgeschrittener Zeitstempel folgende Anforderungen erfüllen: Er soll ausschließlich einem Unterzeichner zugeordnet sein. Eine Identifizierung des Unterzeichners soll gewährleistet sein. Der fortgeschrittene Zeitstempel soll mit Mitteln erzeugt werden, die der Unterzeichner unter seiner alleinigen Kontrolle halten kann. Schließlich soll der fortgeschrittene Zeitstempel mit den Daten, auf die er sich bezieht, so verknüpft sein, dass eine nachträgliche Veränderung der Daten erkannt werden kann. Ein fortgeschrittener Zeitstempel wird in der Regel mittels einer Softwareapplikation erzeugt. Die Softwareapplikation ermöglicht es, verschiedene fortgeschrittene Zeitstempel in kurzem zeitlichem Abstand hintereinander zu erzeugen. Typischerweise beträgt die Zeit zum Erzeugen eines fortgeschrittenen Zeitstempels etwa 50 ms.

Unter einem qualifizierten Zeitstempel (auch als qualifizierte elektronische Signatur bezeichnet) wird eine fortgeschrittene elektronische Signatur verstanden, die auf einem zum Zeitpunkt ihrer Erzeugung gültigen qualifizierten Zertifikat beruht und mit einer sicheren Signaturerstellungseinheit (SSEE) erstellt wurde. Qualifizierte Zeitstempel können nur von akkreditierten Anbietern (*trusted timestamp authority*) erstellt werden. Elektronische Daten mit einem qualifizierten Zeitstempel sind für einen Zeitraum von mindestens 30 Jahren auf ihre Gültigkeit hin überprüfbar. Durch den qualifizierten Zeitstempel ist eine hohe Fälschungssicherheit der Daten gegeben. Der qualifizierte Zeitstempel wird in der Regel mittels einer Signaturkarte erstellt, die von einem Lesegerät ausgelesen wird. Das Erzeugen eines qualifizierten Zeitstempels dauert daher in der Regel länger, als das Erzeugen eines fortgeschrittenen Zeitstempels. Das Erzeugen eines qualifizierten Zeitstempels dauert in der Regel etwa 0,25 s bis 1,6 s.

Nach einer Ausführungsform kann vorgesehen sein, dass der erste Zeitstempel ein fortgeschrittener oder qualifizierter Zeitstempel ist. Beispielsweise kann der erste Zeitstempel in Übereinstimmung mit den im Protokoll RFC3161 festgelegten Richtlinien erstellt werden.

Gemäß einer Weiterbildung umfasst der erste Zeitstempel einen öffentlichen Schlüssel, der zum Erzeugen des ersten Zeitstempels verwendet wurde. Die Anforderungen an die Sicherheit der elektronischen Archivierung sind in verschiedenen Jurisdiktionen unterschiedlich geregelt. Beispielsweise kann ein fortgeschrittener Zeitstempel, der den zu seiner Erstellung verwendeten öffentlichen Schlüssel umfasst, als ausreichende Archivierung angesehen werden. Im Falle eines Systemabsturzes beim Ausführen des Verfahrens ist hierdurch zumindest eine Grundsicherung gewährleistet. Ein derart gebildeter erster Zeitstempel ist migrationsfähig.

Eine weitere Fortbildung sieht vor, dass der Archivzeitstempel ein fortgeschrittener oder qualifizierter Zeitstempel ist. Es kann vorgesehen sein, dass der Archivzeitstempel den Vorgaben der Protokolle RFC4998 oder RFC6283 entsprechend erzeugt wird. Die mit diesen Protokollen definierten Strukturen für eine Nachweisdatei (sogenannter *evidence record*) entsprechen der Spezifikation des *Long-Term Archiving and Notary Service* (LTANS). Das hiermit vorgegebene Format ist für eine spätere Neusignierung geeignet. Ein Neusignierung in bestimmten Zeitabständen kann erforderlich werden, wenn der Archivzeitstempel verblasst. Als Verblassen wird bezeichnet, dass der zur Erzeugung des Archivzeitstempels verwendete Hash-Algorithmus und/oder der Verschlüsselungsalgorithmus für den Zeitstempel nicht mehr kryptografisch sicher sind.

Es kann weiterhin vorgesehen sein, dass zu dem Archivzeitstempel Zusatzinformationen erzeugt und den in der Warteschlange befindlichen Hashwerten zugeordnet werden. Die Zusatzinformationen können Sperrinformation umfassen, beispielsweise das Online Certificate Status Protocol (OCSP) oder eine Sperrliste. Das OCSP ist ein Internet-Protokoll, das es ermöglicht, den Status von Zertifikaten (z.B. X.509-Zertifikate) bei einem Validierungsdienst abzufragen. Benötigt wird das Protokoll unter anderem bei der Prüfung digitaler Signaturen. Des Weiteren wird es bei der Authentisierung in Kommunikationsprotokollen (z. B. bei SSL) oder für die Versendung verschlüsselter E-Mails verwendet. Es wird geprüft, ob Zertifikate, die zur Prüfung der Signatur, zur Identifizierung der Kommunikationspartner oder zur Verschlüsselung verwendet werden, gesperrt und damit bereits vor Ende ihres regulären Gültigkeitszeitraums ungültig wurden. In der Sperrliste sind Informationen zu Anbietern und / oder Signaturkarten angegeben, die als ungültig eingestuft werden. Bevorzugt werden die Zusatzinformationen zusammen mit dem Archivzeitstempel erstellt. Die Zusatzinformationen sollten zum Zeitpunkt der Erstellung aktuell sein.

Nach einer weiteren Ausführungsform ist vorgesehen, dass beim Erzeugen des Archivzeitstempels ein reduzierter Hashbaum erstellt wird. Üblicherweise wird zur Erzeugung eines Zeitstempels für ein Datenobjekt ein Hashwert gebildet, der dem Datenobjekt zugeordnet wird. Der Hashwert wird dann mit dem Zeitstempel versehen und signiert. Für die Archivierung mehrerer Datenobjekte oder Hashwerte (die bereits Datenobjekten zugeordnet sind) kann ein Archivhashbaum erzeugt werden. Ein Hashbaum ist allgemein eine Datenstruktur, die einen Baum aus Hashwerten bildet. Der Archivhashbaum kann ein binärer Baum sein. Hierbei handelt es sich um einen gewurzelten Baum, bei dem jeder Knoten höchstens zwei Kindknoten besitzt. Alternativ kann der Archivhashbaum ein Baum mit mehr als zwei Kindknoten pro Wurzel sein. Der reduzierte Archivhashbaum enthält jeweils nur die Hashwerte, um das jeweils nächste Kind wieder berechnen zu können. Aus jeder Ebene des vollständigen Hashbaums ist jeweils nur ein Hashwert in dem reduzierten Archivhashbaum enthalten.

Eine weitere Fortbildung sieht vor, dass im Schritt b) eine weitere Warteschlange erzeugt wird und die Schritte c) bis f) für die weitere Warteschlange ausgeführt werden. Hierdurch wird ein Load-Balancing für die Archivierung umgesetzt. Es kann weiterhin vorgesehen sein, mehrere Warteschlangen zu erzeugen. Beispielsweise können mehrere Warteschlangen zeitlich parallel erstellt werden, um die Bearbeitung von großen Hashwerttupeln in kurzer vorbestimmter Zeit zu ermöglichen. Jede Warteschlange wird mit Hashwerten gefüllt, sodass anschließend die (parallele) Bearbeitung der Hashwerte innerhalb der vorgegebenen Zeit erfolgt. Gegebenenfalls müssen Ressourcen der Datenverarbeitungseinrichtung an eine zu erwartende Größe von Hashwerttupeln angepasst werden, beispielsweise die Prozessorleistung und/ oder der Arbeitsspeicher. Es kann vorgesehen sein, mehrere Einrichtungen zur Erzeugung von fortgeschrittenen oder qualifizierten Zeitstempeln bereitzustellen, um eine rechtzeitige Bearbeitung zu ermöglichen. Beispielsweise kann jede Warteschlange mit einer ausschließlich ihr zugeordneten Einrichtung zur Erzeugung von Zeitstempeln verknüpft werden.

Es kann ebenfalls vorgesehen sein, dass weitere Hashwerte eines weiteren Hashwerttupels, dessen Zeitinformation einen Zeitraum für die elektronische Archivierung angibt, die größer ist als die vorbestimmte Zeitdauer, in einer Langzeitwarteschlange angeordnet werden und ein weiterer Archivzeitstempel erzeugt und den in der Langzeitwarteschlange befindlichen weiteren Hashwerten zugeordnet wird. In der Langzeitwarteschlange werden Hashwerte angeordnet, deren Archivierung nicht zeitkritisch ist. Wenn parallel sowohl Hashwerttupel, deren Bearbeitung zeitkritisch ist, also innerhalb der vorbestimmten Zeitangabe erfolgen soll, als auch Tupel mit zeitunkritischen Hashwerten empfangen werden, kann hiermit die Bearbeitung aufgeteilt werden. Die Bearbeitung der Langzeitwarteschlange kann beispielsweise zurückgestellt werden, bis die zeitkritschen Tupel archiviert sind. Alternativ kann die Bearbeitung der Langzeitwarteschlange parallel erfolgen, wenn ausreichend Ressourcen zur Verfügung stehen.

Das Format des Archivzeitstempels kann mit dem Format des weiteren Archivzeitstempels übereinstimmen. Hierdurch wird eine gegebenenfalls erforderliche Neusignierung vereinfacht.

Alle genannten Ausführungsformen für das Verfahren können mittels des Computerprogrammprodukts umgesetzt und realisiert werden.

### Beschreibung beispielhafter Ausführungsformen

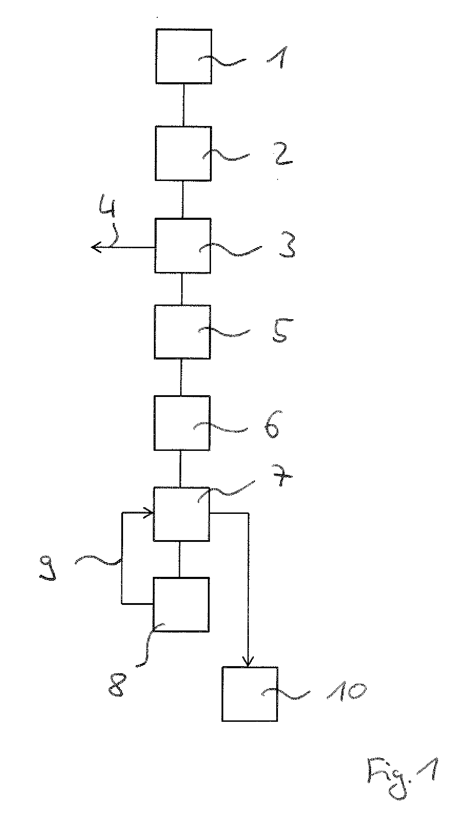

Im Folgenden wird die Erfindung anhand beispielhafter Ausführungsformen näher beschrieben. Hierbei zeigt Fig. 1 ein Ablaufdiagramm für ein Verfahren zur elektronischen Archivierung von Datenobjekten.

Im Schritt (1) wird ein Hashwerttupel empfangen. Der Tupel kann eine beliebige Anzahl von Hashwerten umfassen. Zu dem Hashwerttupel wird in Schritt (2) eine Zeitinformation empfangen. Die Zeitinformation gibt an, innerhalb welcher Zeit die Hashwerte des Tupels archiviert sein sollen. Die Zeitinformation wird in Schritt (3) mit einer vorbestimmten Zeitangabe verglichen. Abhängig von dem Ergebnis des Vergleichs werden die folgenden Schritte ausgeführt.

Wenn die Zeitinformation größer ist als die vorbestimmte Zeitdauer wird die Archivierung als nicht zeitkritisch eingestuft. Der Hashwerttupel wird in Schritt (4) zur weiteren Bearbeitung in eine Langzeitwarteschlange übergeben.

Falls jedoch die Zeitinformation kleiner ist als die vorbestimmte Zeitdauer, ist eine zeitkritische Bearbeitung zu gewährleisten. Zu einem Hashwert wird zunächst ein erster Zeitstempel erzeugt (Schritt (5)), beispielsweise ein fortgeschrittener Zeitstempel. Der erste Zeitstempel umfasst bevorzugt den öffentlichen Schlüssel, der zu seiner Erzeugung verwendet wird. Als nächstes wird in Schritt (6) eine Warteschlange erzeugt. Für die Warteschlange wird in Schritt (7) die Bearbeitungszeit bestimmt. Die Bearbeitungszeit ist im Wesentlichen durch die Zeit bestimmt, die zur Erzeugung eines Archivhashwerts für jeden in der Warteschlange befindlichen Hashwertes bestimmt. Wenn die Bearbeitungszeit kleiner ist als die vorbestimmte Zeit, wird in Schritt (8) ein Hashwert in der Warteschlange angeordnet. Anschließend wird erneut die Bearbeitungszeit für die Warteschlange bestimmt (Schritt (9)). Falls noch Platz in der Schlange ist, wird ein zusätzlicher Hashwert in der Warteschlange angeordnet. Mit jedem weiteren Hashwert in der Warteschlange kommt die Bearbeitungszeit der Warteschlange näher an die vorbestimmte Zeitangabe heran. Die Schleife aus den Schritten (7) bis (9) wird wiederholt, dass bei Hinzufügen eines weiteren Hashwertes die Bearbeitungszeit der Warteschlange größer wäre als die vorbestimmte Zeitangabe. In dem Fall wird die Schleife abgebrochen und die Warteschlange abgearbeitet.

Schließlich wird in Schritt (10) ein Archivzeitstempel für die in der Warteschlange befindlichen Hashwerte erzeugt und diesen zugeordnet. Hierfür wird zu jedem Hashwert ein Archivhashwert erzeugt, beispielsweise in Form eines reduzierten Hashbaums.

Die in der vorstehenden Beschreibung, den Ansprüchen und den Figuren offenbarten Merkmale können sowohl für sich genommen als auch in beliebiger Kombination miteinander für die Verwirklichung der Erfindung von Bedeutung sein.

## Patentansprüche

1. Verfahren zur elektronischen Archivierung von Datenobjekten mittels einer Datenverarbeitungseinrichtung, wobei das Verfahren folgende Schritte umfasst:
- Empfangen eines Hashwerttupels, der einen oder mehrere Hashwerte umfasst, wobei jeder Hashwert jeweils einem Datenobjekt zugeordnet ist,
- Empfangen einer Zeitinformation zu dem Hashwerttupel, die einen Zeitraum angibt, innerhalb dessen die Hashwerte des Hashwerttupels elektronisch archiviert werden sollen, und
- Vergleichen der Zeitinformation mit einer vorbestimmten Zeitangabe,
wobei folgende Schritte ausgeführt werden, wenn die Zeitinformation einen Zeitraum für die elektronische Archivierung angibt, der kleiner ist als die vorbestimmte Zeitangabe:
a) Erzeugen und Zuordnen eines ersten Zeitstempels zu einem Hashwert,
b) Erzeugen einer Warteschlange zur weiteren Bearbeitung der Hashwerte,
c) Bestimmen einer Bearbeitungszeit für die elektronische Archivierung der in der Warteschlange befindlichen Hashwerte, wobei sich die Bearbeitungszeit ergibt aus der Summe der Zeit, die für die elektronische Archivierung der bereits in der Warteschlange befindlichen Hashwerte benötigt wird, sowie der Zeit, die für die elektronische Archivierung eines weiteren Hashwertes benötigt wird,
d) Anordnen eines Hashwertes in der Warteschlange, wenn die Bearbeitungszeit kleiner ist als die vorbestimmte Zeitdauer,
e) Wiederholen der Schritte c) und d), bis beim Schritt c) eine Bearbeitungszeit bestimmt wird, die größer ist als die vorbestimmte Zeitdauer, anschließend
f) Erzeugen und Zuordnen eines Archivzeitstempels zu den in der Warteschlange befindlichen Hashwerten.

2. Verfahren nach Anspruch 1, wobei der erste Zeitstempel ein fortgeschrittener oder qualifizierter Zeitstempel ist.

3. Verfahren nach Anspruch 1 oder 2, wobei der erste Zeitstempel einen öffentlichen Schlüssel umfasst, der zum Erzeugen des ersten Zeitstempels verwendet wurde.

4. Verfahren nach einem der vorangehenden Ansprüche, wobei der Archivzeitstempel ein fortgeschrittener oder qualifizierter Zeitstempel ist.

5. Verfahren nach einem der vorangehenden Ansprüche, wobei zu dem Archivzeitstempel Zusatzinformationen erzeugt und den in der Warteschlange befindlichen Hashwerten zugeordnet werden.

6. Verfahren nach einem der vorangehenden Ansprüche, wobei beim Erzeugen des Archivzeitstempels ein reduzierter Hashbaum erstellt wird.

7. Verfahren nach einem der vorangehenden Ansprüche, wobei im Schritt b) eine weitere Warteschlange erzeugt wird und die Schritte c) bis f) für die weitere Warteschlange ausgeführt werden.

8. Verfahren nach einem der vorangehenden Ansprüche, wobei weitere Hashwerte eines weiteren Hashwerttupels, dessen Zeitinformation einen Zeitraum für die elektronische Archivierung angibt, die größer ist als die vorbestimmte Zeitdauer, in einer Langzeitwarteschlange angeordnet werden und ein weiterer Archivzeitstempel erzeugt und den in der Langzeitwarteschlange befindlichen weiteren Hashwerten zugeordnet wird.

9. Verfahren nach Anspruch 8, wobei das Format des Archivzeitstempels mit dem Format des weiteren Archivzeitstempels übereinstimmt.

10. Computerprogrammprodukt, das auf einem physikalischen Speicher ein Programm umfasst, welches bei Abarbeitung in einer Datenverarbeitungseinrichtung ein Verfahren nach einem der vorangehenden Ansprüche ausführt.
